Europäisches Patentamt

European Patent Office

Office européen des brevets

(19)

(11) Veröffentlichungsnummer: **0 157 152**
**A2**

(12) **EUROPÄISCHE PATENTANMELDUNG**

(21) Anmeldenummer: 85101964.6

(22) Anmeldetag: 22.02.85

(51) Int. Cl.⁴: **C 01 G 45/00**

(30) Priorität: 05.03.84 DE 3408030

(43) Veröffentlichungstag der Anmeldung: 09.10.85
Patentblatt 85/41

(84) Benannte Vertragsstaaten: **BE DE FR GB**

(71) Anmelder: **HOECHST AKTIENGESELLSCHAFT,
Postfach 80 03 20, D-6230 Frankfurt am Main 80 (DE)**

(72) Erfinder: **Lehr, Klaus, Dr., Am grünen Weg 10,
D-5030 Hürth (DE)**
Erfinder: **Hofmann, Bernhard, Dr., Schaesbergstrasse 3,
D-5030 Hürth (DE)**
Erfinder: **Fricker, Günter, Stettiner Strasse 18,
D-5040 Brühl (DE)**
Erfinder: **Heymer, Gero, Dr., Fasanenaue 12,
D-5042 Erftstadt (DE)**

(54) **Verfahren zur Herstellung von Mangan-Karbonat.**

(57) Die vorliegende Erfindung betrifft ein Verfahren zur Herstellung von Mangan-Karbonat großer Reinheit, hoher Schüttdichte und guter Oxidierbarkeit zu $\gamma$-Braunstein, wobei Mn(II)-haltige Ausgangsstoffe in im Überschuß eingesetzter Ammonsalz-Lösung gelöst und aus der nach Filtration erhaltenen Mangansalz-Lösung das Mangan-Karbonat mittels ammoniakalischer Diammonium-Karbonat-Lösung ausgefällt, abfiltriert und ausgewaschen wird, und wobei das ammonsalzhaltige Filtrat einerseits im Kreislauf zur Lösung der Mn(II)-haltigen Ausgangsstoffe benutzt wird und andererseits zur Herstellung der ammoniakalischen Diammonium-Karbonat-Lösung aus Kohlendioxid und Ammoniak dient, und wobei schließlich das Verfahren als isothermes Kreislaufverfahren in allen Reaktionsstufen unter gleichen Temperaturen zwischen 40–80 °C betrieben wird.

HOECHST AKTIENGESELLSCHAFT

Verfahren zur Herstellung von Mangan-Karbonat

Die Erfindung betrifft ein Verfahren zur Herstellung von Mangan-Karbonat großer Reinheit, hoher Schüttdichte und guter Oxidierbarkeit zu γ-Braunstein. Mangan-Karbonat ist ein Zwischenprodukt bei der Herstellung von γ-Braunstein, der als Batterierohstoff steigende Bedeutung hat.

In der Technik werden zwei grundsätzlich verschiedene Wege zur Herstellung von γ-Braunstein beschritten. Der durch die Elektrolyse von Mangan(II)-Salzlösungen produzierte γ-Braunstein ist von hoher Reinheit und erfüllt die hohen Anforderungen, die an den Rohstoff für die Herstellung von Hochleistungsbatterien gestellt werden müssen. Nachteilig bei diesem Elektrolyt-Verfahren ist der Einsatz aufwendiger Investitionen und der hohe Bedarf an elektrischer Energie.

Die zweite Herstellungsmöglichkeit von γ-Braunstein, auch als Kunst- oder Chemiebraunstein beschrieben, basiert auf rein chemischen Wegen. Bei diesen Verfahren wird aus einer Mangan(II)-Salzlösung entweder Mangan-Karbonat ausgefällt und nach einer Filtration in einer nachgeschalteten Wärmebehandlungsreaktion in γ-Braunstein überführt oder der Kunst- oder Chemiebraunstein wird durch Oxidationsmittel direkt ausgefällt und durch eine Wärmebehandlung nach der Abtrennung der Mutterlauge in seinen Eigenschaften den speziellen Erfordernissen für den Einsatz in Batterien angepaßt.

Die US-PS 2 625 462 beschreibt ein Verfahren zur Herstellung von Mangan-Karbonat, bei welchem reduziertes Manganerz mit einer $NH_3$-$CO_2$-Salzlösung bei Raumtemperatur behandelt wird. Die erhaltene Manganlösung wird in einem Druckgefäß eine Stunde lang auf 50 - 120°C erhitzt. Hierbei wird das anwesende Mangan als Mangan-Karbonat zu 90 % ausgefällt. Die anfallende Mutterlauge wird mit Kohlendioxid versetzt, abgekühlt und zur Laugung von frischem Manganerz rückgeführt.

Bei diesem Verfahren ist zum Aufheizen und Abkühlen der umlaufenden Salzlösungen ein hoher Energieaufwand nötig. Das erhaltene Mangan-Karbonat weist eine kleine Körnung von wenigen /um auf; daraus resultiert nach der Oxidation zu $MnO_2$ eine sehr kleine Schüttdichte. Aus diesem Grund ist dieses Mangan-Karbonat zur Weiterverarbeitung für den Einsatz in Hochleistungsbatterien ungeeignet.

Die US-PS 2 621 107 baut auf der Arbeitsweise der US-PS 2 608 463 auf, die ihrerseits auf dem Verfahren der US-PS 2 122 735 basiert. Bei diesen Arbeitsweisen wird ein reduziertes Manganerz mit einer wäßrigen Lösung, enthaltend $(NH_4)_2CO_3$, $NH_3$ und Reduktionsmittel, umgesetzt. Außer Hydroxylaminen können bei diesen Verfahren Ferro-Salze, Sulfite und Sulfide als Reduktionsmittel beim Laugevorgang zugegen sein. Durch die Reduktionsmittel wird der Laugevorgang sowohl in der Umsatzgeschwindigkeit als auch in der Ausbeute erhöht. Die bei 10 - 30°C erhaltene Mangansalz-Lösung wird verdünnt auf etwa 50 g/l Mangan und mit Kohlendioxid begast. Das Mangan wird bei Temperaturen von mehr als 60°C unter Abtreibung von Ammoniak als Mangan-Karbonat ausgefällt.

Die Oxidierbarkeit dieses Mangan-Karbonats zu γ-Braunstein ist schlecht. So wird innerhalb von 10 Stunden bei 300°C das Mangan-Karbonat erst zu 75 % in Mangandioxid umgewandelt. Durch einen nachgeschalteten Reaktionsschritt kann dieses Mangandioxid in seinen Eigenschaften so verändert werden, daß es als Batterierohstoff eingesetzt werden kann; als Rohstoff für Hochleistungsbatterien ist aber auch dieses nachbehandelte Mangandioxid nicht brauchbar.

Aus der US-PS 1 889 021 ist ein Mangan-Laugungsverfahren bekannt, bei welchem Mangan(II)-Salze mittels Diammonium-Sulfat-Lösungen aus reduzierten Manganerzen bei Siedetemperatur gebildet werden. Durch Zusatz von Ammoniak und Kohlendioxid in diese Mangan(II)-Salz-Lösung bei Raumtemperatur und anschließendem Erhitzen auf etwa 80°C wird Mangan-Karbonat ausgefällt.

Das erhaltene Mangan-Hydroxid-Karbonat ist von schlechter Kristallinität und geringer Korngröße. Es eignet sich wegen seiner schlechten Oxidierbarkeit und seiner kleinen Schüttdichte nicht zur Weiterverarbeitung zu Mangandioxid für Batterien.

Der Erfindung liegt die Aufgabe zugrunde, ein Verfahren anzugeben, mit dem es nunmehr möglich ist, in energiesparender Verfahrensweise und mit geringen Investitionskosten Mangan-Karbonat von großer Produktreinheit, hoher Schüttdichte und guter Oxidierbarkeit zu γ-Braunstein herzustellen.

Überraschend konnte diese Aufgabe dadurch gelöst werden, daß Mn(II)-haltige Ausgangsstoffe in im Überschuß eingesetzter Ammonsalz-Lösung gelöst und aus der nach Filtration erhaltenen Mangansalzlösung das Mangan-Karbonat mittels ammoniakalischer Diammonium-Karbonat-Lösung ausgefällt, abfiltriert und ausgewaschen wird, wobei das ammonsalzhaltige Filtrat einerseits im Kreislauf zur Lösung der Mn(II)-haltigen Ausgangsstoffe benutzt wird und andererseits zur Herstellung der ammoniakalischen Diammonium-Karbonat-Lösung aus Kohlendioxid und Ammoniak dient, und wobei das Verfahren als isothermes Kreislaufverfahren in allen Reaktionsstufen unter gleichen Temperaturen zwischen 40 - 80°C betrieben wird.

Das Verfahren der Erfindung hat sich in seiner Anwendung besonders auch dann bewährt, wenn der Mn(II)-haltige Ausgangsstoff MnO-haltiges, reduziertes Erz ist. Das Verfahren arbeitet besonders vorteilhaft, wenn in allen Reaktionsstufen unter gleichen Temperaturen zwischen 55 - 65°C, insbesondere bei einer Temperatur von 60°C, gearbeitet wird und wenn die Ammonsalz-Lösung eine Diammonium-Sulfat-oder eine Ammonium-Nitrat-Lösung ist.

Zweckmäßig wird das Verfahren betrieben mit einer Ammonsalz-Lösung, die 0,5 - 2,5 Mol/l, vorzugsweise 0,8 - 1,2 Mol/l Diammonium-Sulfat, das heißt beispielsweise 0,9 - 1,1 Mol/l Diammonium-Sulfat, enthält oder die 1,0 - 5,0 Mol/l, vorzugsweise 1,6 - 2,4 Mol/l Ammonium-Nitrat, das heißt beispielsweise 1,8 - 2,2 Mol/l Ammonium-Nitrat, enthält. Das Verfahren erlaubt auch die Verwendung von Ammonium-Chlorid anstelle von Ammonium-Nitrat in der beschriebenen Konzentration, jedoch ist die Verwendung von ammoniumchloridhaltigen Lösungen aus Gründen der Korrosion nicht empfehlenswert.

Das Verfahren ist weiter dadurch charakterisiert, daß zur Herstellung der ammoniakalischen Diammonium-Karbonat-Lösung insbesondere Ammoniak dient, das bei der Lösung der Mn(II)-haltigen Ausgangsstoffe mittels Ammonsalz-Lösung frei wird. Erfindungsgemäß soll diese ammoniakalische Diammonium-Karbonat-Lösung 1,0 - 3,0 Mol/l, vorzugsweise 2,4 - 2,6 Mol/l Diammonium-Karbonat enthalten und auf einen pH-Wert von 7,8 - 8,2, insbesondere von etwa 8,0, eingestellt werden.

Besonders gute Produkte werden erhalten, wenn in der ammoniakalischen Diammonium-Karbonat-Lösung ein molares Verhältnis von Diammonium-Karbonat zu Diammonium-Sulfat von 1 - 3 :1, insbesondere von 2,5 : 1, bzw. ein molares Verhältnis von Diammonium-Karbonat zu Ammonium-Nitrat von 0,5 - 1,5 : 1, insbesondere von 1,25 : 1, eingehalten wird und wenn in der Fällstufe ein molares Verhältnis von Mn(II) zu Karbonat von 1 : 0,95 - 1,05, vorzugsweise von 1,0 : 1,0 eingehalten wird.

Günstige Ausbeuten werden erzielt, wenn die Lösung der Mn(II)-haltigen Ausgangsstoffe durch Anlegen von Unterdruck im Sieden erfolgt. Eine vorteilhafte Gestaltung des Verfahrens ist gegeben, wenn in das Kreislaufverfahren Wasser, vorzugsweise in Form von Waschwasser, sowie Ammonsalz bzw. gasförmiges Ammoniak und die entsprechende Säure eingegeben werden. Schließlich kann das Waschwasser der Mangan-Karbonat-Filtration einerseits zur Auswaschung des Löserückstandes der Ausgangsstoffe und/oder andererseits zur Auswaschung der Abgase aus der Herstellung der ammoniakalischen Diammonium-Karbonat-Lösung dienen und in diese zurückgeführt werden.

Erfindungsgemäß werden die ammoniumsalzhaltigen Mn(II)-Salz-Lösungen und die ammoniumsalzhaltigen ammoniakalischen Diammonium-Karbonat-Lösungen vor der Reaktion miteinander durch die im Fällbehälter vorliegende Mutterlauge verdünnt.

Mit dem erfindungsgemäßen isothermen Kreislaufverfahren wird in energiesparender Weise ein Mangan-Karbonat erhalten, das folgender Spezifikation entspricht:

Sulfatgehalt )  
Nitratgehalt ) :    0,3 - 0,7 Gew%  
Schüttdichte:    1,4 - 1,8 g/ml  (nach Scott)  
Oxidierbarkeit:    93 % nach 0,5 h  
100 % nach 2,0 h  
Mittlerer  
Korndurchmesser:    35 - 55 /um  (Laser-Micro-trac-Gerät)

| Raum-Zeit-Ausbeute: | 120 - 160 | kg/h . $m^3$ | (nutzbarem Fällbehälter-volumen) |
|---|---|---|---|
| Ausbeute: | ca. 90 % | | bezogen auf eingesetztes Laugungserz |

Aus dem erfindungsgemäß hergestellten Mangan-Karbonat kann ein $\gamma$-Braunstein durch oxidierende Röstung bei 370°C in einer Gasatmosphäre, bestehend aus einem bei 20°C mit Wasser gesättigten Sauerstoffstrom, innerhalb einer Röstdauer von 2 Stunden erhalten werden, der sich vorzüglich für die Einarbeitung in Trockenbatterien eignet und insbesondere für die Herstellung von Hochleistungsbatterien geeignet ist, wenn das Produkt noch in bekannter Weise mit Natrium-Chlorat nach einer in der DE-PS 11 4o 183 angegebenen Methode nachbehandelt wird.

Die Schüttdichte wurde nach der Arbeitsweise von Scott gemäß der Veröffentlichung in ASTM Book of Standards 197o (7), Seiten 346-347, ermittelt.

Die Oxidierbarkeit wurde mittels Thermogravimetrie ermittelt. Hierzu wurden etwa 200 mg getrocknetes Mangan-Karbonat bei einer linearen Aufheizgeschwindigkeit von 10°C/min auf 370°C aufgeheizt und anschließend der Gewichtsverlust bei 370°C in Abhängigkeit zur Temperzeit registriert.

Durch den Gasraum der Analysenprobe wurde ein bei 20°C mit Wasser gesättigter Sauerstoffstrom geleitet. Der theoretische Gewichtsverlust bei der Umwandlung von Mangan-Karbonat in Mangandioxid beträgt 24,4 %.

Eventuell über diesen Gewichtsverlust gehende Werte sind beispielsweise begründet durch die Abgabe von eingeschlossenem Wasser oder durch eine Nitrat-Zersetzung. Ermittelt wurde der Gewichtsverlust nach Beendigung der Aufheizphase nach 30 min und nach weiteren 60 min.

7 0157152

Der mittlere Korndurchmesser wurde mittels eines Laser-Microtrac-Gerätes der Firma Leeds & Northrup bestimmt.

Der Vorteil des isothermen Kreislaufverfahrens bezüglich der Heiz- und Kühlenergien ist der folgenden Zusammenstellung zu entnehmen:

0157152

| Verfahren / Temperatur | Energieaufwand kJ/1000 kg Lösung | |
|---|---|---|
| | Einzel-schritt | $\sum$ |
| **Erzaufschluß mit Säure (RT = 95°C)** Aufheizen der Lösung von 20°C $\longrightarrow$ 95°C zum Abbau der Gipsübersättigung wird anschließend auf 20°C abgekühlt und zur Durchführung der Fällung wieder auf 60°C hochgeheizt | $135.10^3$ $290.10^3$ $155.10^3$ | $580.10^3$ |
| **Erzaufschluß mit Säure (RT = 60°C)** Aufheizen der Lösung von 20°C $\longrightarrow$ 60°C zum Abbau der Gipsübersättigung wird anschließend auf 20°C abgekühlt und zur Durchführung der Fällung wieder auf 60°C hochgeheizt | $0$ $155.10^3$ $155.10^3$ | $310.10^3$ |
| **Erzaufschluß mit Carbamat-Lösung (RT = 20°C)** Aufheizen der Lösung zur $MnCO_3$-Fällung auf 60°C und anschließend Abkühlen auf Aufschlußtemperatur | $155.10^3$ $155.10^3$ | $310.10^3$ |
| **Erzaufschluß mit Ammonsalz-Lösung bei 60°C** und anschließende Fällung bei 60°C - erfindungsgemäßes Verfahren | $0$ | $0$ |

Bei einem Kreislaufverfahren mit Rückführung der Ammonsalz-Lösung zur Auslaugung des Erzes und mit Fällung des Mangan-Karbonats mit Diammonium-Karbonat-Lösung, die mit Frischwasser angesetzt wird, muß zur Durchführung der Fällung die Diammonium-Karbonat-Lösung von z.B. 20°C auf z.B. 60°C aufgeheizt werden. Bei einer Diammonium-Karbonat-Konzentration von 2 Mol/l werden für die Herstellung von 1000 kg $MnCO_3$ 4,35 $m^3$ $(NH_4)_2CO_3$-Lösung benötigt. Die Aufheizung dieser Lösung benötigt ca. 0,75 · $10^6$ kJ/1000 kg $MnCO_3$.

Weiterhin fällt zwangsweise die der Ammonium-Karbonat-Lösung entsprechende Menge Abwasser (4,35 $m^3$) an. Unberücksichtigt bleibt dabei das Problem der Verdünnung der Ammonsalz-Lösung.

Das erfindungsgemäße Kreislaufverfahren wird anhand des beigefügten Fließschemas näher erläutert:

Aus dem Vorratsgefäß A werden kontinuierlich 32,9 kg/h reduziertes Iminierz in die Lösestufe 1 gefördert. Das reduzierte Iminierz hatte folgende Zusammensetzung:

$$78,5 \% \ MnO$$
$$1,2 \% \ MnO_2$$
$$0,7 \% \ Fe_2O_3$$
$$7,1 \% \ SiO_2$$

In die Lösestufe 1 wurden weiter 546 l/h ammoniakalische und 1,0 Mol/l enthaltende wäßrige Diammonium-Sulfat-Lösung aus der Abtrennstufe 5 über die Leitung 1o mit einem pH-Wert von 8,0 und einer Temperatur von 58°C eindosiert. Die Lösestufe 1 wurde mittels einer Vakuumpumpe 13 über Rohrleitung 6 bei einer Temperatur von 60°C und einem Druck von etwa 0,2 bar am Sieden gehalten. Die Verdampfungswärme und Wärmeverluste wurden über einen Wärmetauscher der Lösestufe 1 zugeführt. Aus dem Vorratsgefäß G wurden 500 g/h Schwefelwasserstoff der Lösestufe 1 zugesetzt. Eventuelle Ammoniak- oder Schwefelsäureverluste wurden aus dem Vorratsgefäß B ersetzt.

Aus der Lösestufe 1 wurde kontinuierlich Reaktionsprodukt entnommen und auf einem Bandfilter 2 in ausgelaugte Erzrückstände und ammoniumsalzhaltige $MnSO_4$-Lösung getrennt. Das ausgelaugte Erz wurde über Leitung 12 mit 10 l/h Waschwasser aus der Abtrennstufe 5 gewaschen. Das hierbei anfallende Waschwasser wurde über Leitung 11 in die Lösestufe 1 geführt. Der ausgelaugte Erzrückstand wurde im Kübel D gesammelt.

Die gereinigte $MnSO_4$-Lösung enthielt 0,6 Mol/l $MnSO_4$ und 0,4 Mol/l $(NH_4)_2SO_4$ und hatte einen pH-Wert von 7,7. Die $MnSO_4$-Lösung enthielt noch folgende Verunreinigungen:

| Bestandteil | mg/l |
|---|---|
| Ca | 220 |
| Mg | 200 |
| Na | 11 |
| K | 26 |
| Fe | 0,6 |
| Cu | < 0,1 |
| Co | 0,5 |
| Ni | 0,2 |

Die $MnSO_4$-Lösung wurde in einer Menge von 546 l/h in die Fällstufe 4 eindosiert.

Das über die Vakuumpumpe 13 abgesaugte Ammoniak wurde in der Karbonisierungsstufe 3 zusammen mit 14,4 kg/h Kohlendioxid aus dem Vorratsgefäß C in ammoniakalischer Diammonium-Sulfat-Lösung absorbiert. Die in der Karbonisierungsstufe 3 benutzte Diammonium-Sulfat-Lösung wurde aus der Leitung 1o über die Leitung 8 abgezweigt.

Aus der Karbonisierungsstufe 3 wurden über Leitung 7 insgesamt 131 l/h ammoniakalische Diammonium-Karbonat-Lösung mit Gehalten von 2,5 Mol/l $(NH_4)_2CO_3$ und 1,0 Mol/l $(NH_4)_2SO_4$ mit einem pH-Wert von 8,0 und einer Temperatur von 60°C in die Fällstufe 4 gefördert.

Die Fällstufe 4 bestand aus einem Doppelmantelbehälter mit Intensivrührer, Überlauf für die $MnCO_3$-Maische und getrennten Einlaufrohren für die ammoniumsalzhaltigen $MnSO_4$- und $(NH_4)_2CO_3$-Lösungen. Die Einlaufrohre befanden sich an weit auseinanderliegenden Stellen oberhalb der $MnCO_3$-Maische. Der Doppelmantel dient zur Temperierung des Inhalts auf 60°C.

Die Abtrennstufe 5 bestand aus einem Bandfilter. Die hier abgetrennte Mutterlauge wurde über Leitung 10 in das Verfahren rückgeführt. Das abgetrennte Mangan-Karbonat wurde aus dem Vorratsgefäß E mit 20 l/h Wasser gewaschen. Über Leitung 9 wurde ein Teil des Waschwassers abgezweigt zur Nachwaschung abziehender Brüden aus der Karbonisierungsstufe 3. Das im Stromtrockner F bei 105°C getrocknete Mangan-Karbonat hatte folgende Stoffdaten:

Mittlerer Korndurchmesser: 41,0 μm
Schüttdichte: 1,41 g/ml
Sulfatgehalt: 0,7 %
Oxidierbarkeit: 22,7 % nach 30 min bei 370°C
24,6 % nach 90 min bei 370°C

Als weitere Verunreinigungen enthielt das Mangan-Karbonat:

2600 ppm Ca
1000 ppm $NH_4^+$
60 ppm K

Die Ausbeute betrug 90,2 %, berechnet auf den MnO-Gehalt im eingesetzten Erz.

Die Raum-Zeit-Ausbeute in der Fällstufe betrug 123 kg $MnCO_3$ pro Stunde und $m^3$ nutzbarem Fällbehältervolumen.

Das nutzbare Fällbehältervolumen entspricht der Wassermenge, die in dem gerührten, gerade nicht mehr überlaufenden Behälter vorhanden ist.

Abschließend sei vermerkt, daß unter dem in Ansprüchen und Beschreibung gebrauchten Begriff Lösung im Sinne der vorliegenden Erfindung jeweils wässerige Lösungen zu verstehen sind.

HOECHST AKTIENGESELLSCHAFT                    HOE 84/H 004


Verfahren zur Herstellung von Mangan-Karbonat


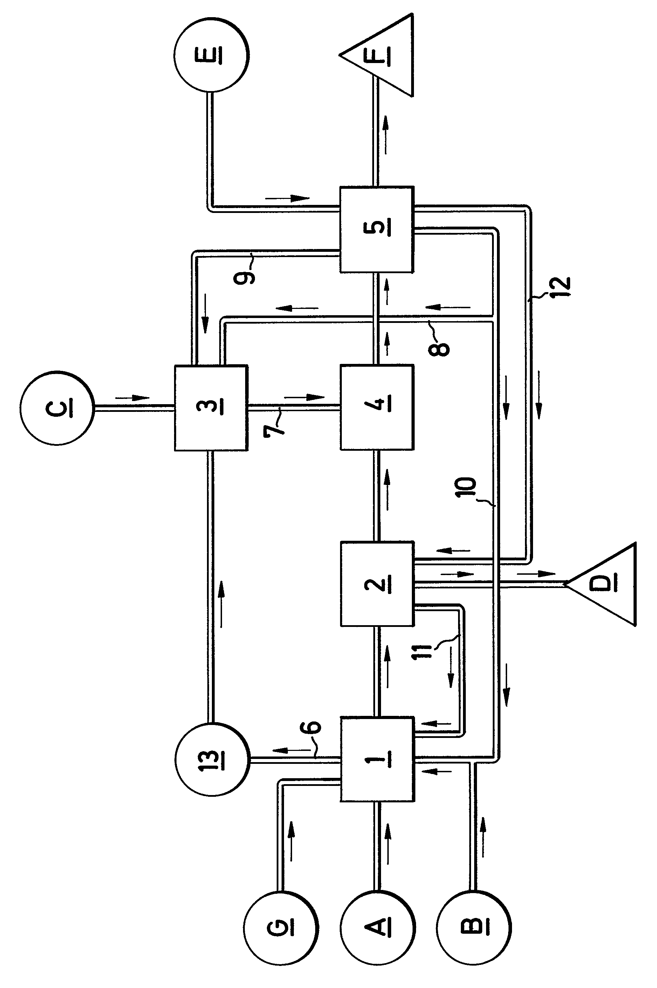

Patentansprüche

1. Verfahren zur Herstellung von Mangan-Karbonat großer
   Reinheit, hoher Schüttdichte und guter Oxidierbarkeit
   zu $\gamma$-Braunstein, <u>dadurch gekennzeichnet</u>, daß Mn(II)-
   haltige Ausgangsstoffe in im Überschuß eingesetzter
   Ammonsalz-Lösung gelöst und aus der nach Filtration
   erhaltenen Mangansalzlösung das Mangan-Karbonat mittels
   ammoniakalischer Diammonium-Karbonat-Lösung ausgefällt,
   abfiltriert und ausgewaschen wird, wobei das ammonsalzhaltige Filtrat einerseits im Kreislauf zur Lösung der
   Mn(II)-haltigen Ausgangstoffe benutzt wird und andererseits zur Herstellung der ammoniakalischen Diammonium-
   Karbonat-Lösung aus Kohlendioxid und Ammoniak dient,
   und wobei das Verfahren als isothermes Kreislaufverfahren in allen Reaktionsstufen unter gleichen Temperaturen zwischen 40 - 80°C betrieben wird.


2. Verfahren nach Anspruch 1, <u>dadurch gekennzeichnet</u>, daß
   der Mn(II)-haltige Ausgangsstoff MnO-haltiges, reduziertes Erz ist.


3. Verfahren nach Anspruch 1 oder 2, <u>dadurch gekennzeichnet</u>,
   daß in allen Reaktionsstufen unter gleichen Temperaturen
   zwischen 55 - 65°C, insbesondere bei einer Temperatur
   von 60°C, gearbeitet wird.


4. Verfahren nach einem der vorhergehenden Ansprüche, <u>da-
   durch gekennzeichnet</u>, daß die Ammonsalz-Lösung eine Diammonium-Sulfat- oder Ammonium-Nitrat-Lösung ist.

5. Verfahren nach Anspruch 4, dadurch gekennzeichnet, daß die Ammonsalz-Lösung 0,5 - 2,5 Mol/l, vorzugsweise 0,8 - 1,2 Mol/l Diammonium-Sulfat enthält.

6. Verfahren nach Anspruch 4, dadurch gekennzeichnet, daß die Ammonsalz-Lösung 1,0 - 5,0 Mol/l, vorzugsweise 1,6 - 2,4 Mol/l Ammonium-Nitrat enthält.

7. Verfahren nach einem der vorhergehenden Ansprüche, dadurch gekennzeichnet, daß zur Herstellung der ammoniakalischen Diammonium-Karbonat-Lösung Ammoniak dient, das bei der Lösung der Mn(II)-haltigen Ausgangsstoffe mittels Ammonsalz-Lösung frei wird.

8. Verfahren nach Anspruch 7, dadurch gekennzeichnet, daß die ammoniakalische Diammonium-Karbonat-Lösung 1,0 - 3,0 Mol/l, vorzugsweise 2,4 - 2,6 Mol/l Diammonium-Karbonat enthält und auf einen pH-Wert von 7,8 - 8,2, insbesondere von etwa 8,0, eingestellt wird.

9. Verfahren nach Anspruch 8, dadurch gekennzeichnet, daß in der ammoniakalischen Diammonium-Karbonat-Lösung ein molares Verhältnis von Diammonium-Karbonat zu Diammonium-Sulfat von 1 - 3 : 1, insbesondere von 2,5 : 1, bzw. ein molares Verhältnis von Diammonium-Karbonat zu Ammoniumnitrat von 0,5 - 1,5 : 1, insbesondere von 1,25 : 1, eingehalten wird.

10. Verfahren nach einem der vorhergehenden Ansprüche, dadurch gekennzeichnet, daß in der Fällstufe ein molares Verhältnis von Mn(II) zu Karbonat von 1 : 0,95 - 1,05, vorzugsweise von 1,0 : 1,0 eingehalten wird.

11. Verfahren nach einem der vorhergehenden Ansprüche, dadurch gekennzeichnet, daß die Lösung der Mn(II)-haltigen Ausgangsstoffe durch Anlegen von Unterdruck im Sieden erfolgt.

12. Verfahren nach einem der vorhergehenden Ansprüche, <u>dadurch gekennzeichnet</u>, daß in das Kreislaufverfahren Wasser, vorzugsweise in Form von Waschwasser, sowie Ammonsalz bzw. gasförmiges Ammoniak und die entsprechende Säure eingegeben werden.

13. Verfahren nach einem der vorhergehenden Ansprüche, <u>dadurch gekennzeichnet</u>, daß das Waschwasser der Mangan-Karbonat-Filtration einerseits zur Auswaschung des Löserückstandes der Ausgangsstoffe dient und/oder andererseits zur Auswaschung der Abgase aus der Herstellung der ammoniakalischen Diammonium-Karbonat-Lösung dient und in diese zurückgeführt wird.

14. Verfahren nach einem der vorliegenden Ansprüche, <u>dadurch gekennzeichnet</u>, daß die ammoniumsalzhaltigen Mn(II)-Salz-Lösungen und die ammoniumsalzhaltigen ammoniakalischen Diammonium-Karbonat-Lösungen vor der Reaktion miteinander durch die in der Fällstufe vorliegende Mutterlauge verdünnt werden.